# EUROPEAN PATENT SPECIFICATION

(11) **EP 3 605 271 B1**
(45) Date of publication and mention of the grant of the patent: **20.10.2021**
(21) Application number: 19188984.9
(22) Date of filing: 30.07.2019
(51) Int. Cl.: H04M 1/72454, G06F 1/16, G06F 1/26, H04M 1/18

(54) **INFORMATION TERMINAL, CONTROL METHOD AND COMPUTER PROGRAM**
INFORMATIONSENDGERÄT, STEUERUNGSVERFAHREN UND COMPUTERPROGRAMM
TERMINAL D'INFORMATIONS, PROCÉDÉ DE COMMANDE ET PROGRAMME INFORMATIQUE

(30) Priority: 31.07.2018 JP 2018143516; 21.01.2019 JP 2019007800
(43) Date of publication of application: 05.02.2020
(73) Proprietor: Casio Computer Co., Ltd., Tokyo 151-8543 (JP)
(72) Inventor: UKAWA, Kan, Tokyo, 205-8555 (JP)
(74) Representative: Plougmann Vingtoft a/s

(56) References cited:
- US-A- 5 818 204
- US-A1- 2016 084 918

## Description

### BACKGROUND OF THE INVENTION

### 1. Field of the Invention

The present invention relates to an information terminal, a control method, and a computer program.

### 2. Description of the Related Art

Conventionally, a handheld terminal is well known as an information terminal which is used in stores such as supermarkets and warehouses and which receives input of and manages information regarding jobs such as management of merchandise. For example, the handheld terminal includes a scanner which scans a symbol (barcode, two-dimensional code) including information such as a merchandise identification number attached to the merchandise which is to be managed.

The handheld terminal may be used in places where the temperature may be cold, for example, cold areas or freezers. At low temperatures, battery voltage drastically decreases due to the internal resistance of the battery increasing in the handheld terminal, and shut down may occur. Therefore, there is a well-known electronic device which monitors the battery temperature using the thermistor which measures the temperature of the battery and if the monitored battery temperature is low compared to a preset threshold temperature, the time interval for controlling the processing ability of the internal processor is set to a short interval (Japanese Patent Application Laid-Open Publication No. 2015-230613).

Usually, the battery used in the handheld terminal includes a thermistor which detects the battery temperature of the battery, and the control regarding the temperature such as the battery temperature control during charging is performed using the battery temperature detected by the thermistor. As described above, the temperature sensor is not provided in the handheld terminal main body so that the configuration of the handheld terminal becomes simple. Since the temperature sensor is separated from heating elements such as a processor, the temperature can be suitably detected.

Normally, in order to prevent a situation in which the power cannot be supplied during a job, the handheld terminal includes a detachable battery. If the power runs out in the battery attached to the handheld terminal during the job, the user can exchange the battery with another charged battery to continue the job. When the temperature is low, the duration of power supply from the battery becomes short, and the possibility that the battery is exchanged increases.

When the battery is exchanged, there may be a difference in the temperature between the handheld terminal main body (terminal main body) and the battery of the handheld terminal. Therefore, if only the battery temperature is monitored as in the conventional electronic devices, a problem may occur in the operation even if the setting is performed in the device in the handheld terminal according to the battery temperature. US5818204A discloses deciding whether to charge a battery based on an elapsed time since the device is turned on and based on a measured temperature.

### SUMMARY OF THE INVENTION

According to an aspect of the present invention, there is an information terminal according to claim 1, a method according to claim 9 and a program according to claim 10.

### BRIEF DESCRIPTION OF THE DRAWINGS

FIG. 1A is a diagram showing an exterior appearance of a front of a handheld terminal according to the present embodiment.
FIG. 1B is a diagram showing an exterior of a back of the handheld terminal with a battery attached.
FIG. 1C is a diagram showing an exterior of the back of the handheld terminal with the battery detached.
FIG. 2 is a block diagram showing a functional configuration of the handheld terminal.
FIG. 3 is a flowchart showing a display setting process.
FIG. 4 is a diagram showing a battery temperature with relation to time.
FIG. 5 is a flowchart showing a flashing unit setting process.

### DETAILED DESCRIPTION OF THE PREFERRED EMBODIMENTS

The details of the present embodiment are described with reference to the attached drawings. The present invention is not limited to the illustrated examples.

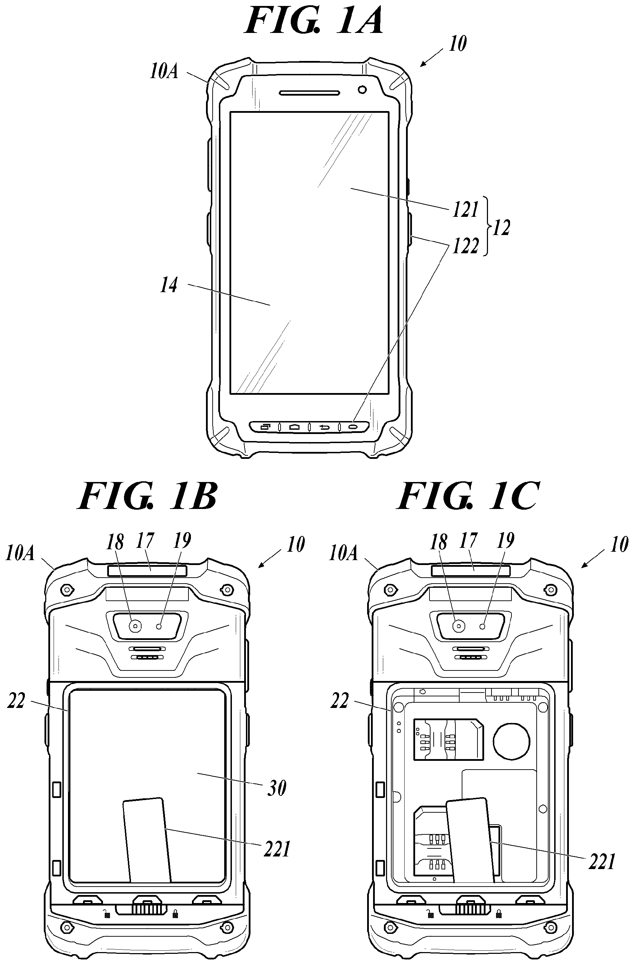

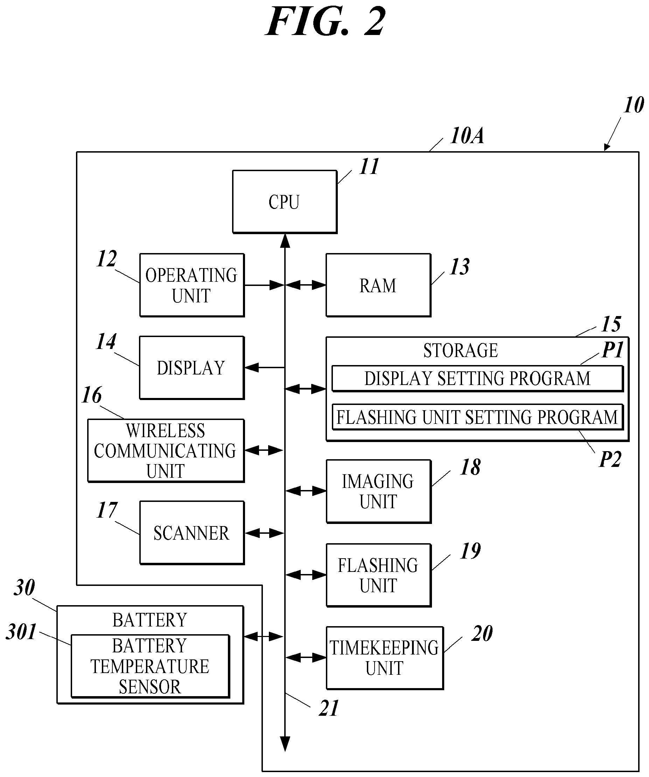

With reference to FIG. 1 to FIG. 5, embodiments of the present invention are described. First, with reference to FIG. 1 and FIG. 2, the configuration of the apparatus according to the present embodiment is described. FIG. 1A is a diagram showing an outer appearance of a front of a handheld terminal 10 according to the present embodiment. FIG. 1B is a diagram showing an outer appearance of a back of the handheld terminal 10 when a battery 30 is attached. FIG. 1C is a diagram showing an outer appearance of a back of the handheld terminal 10 when the battery 30 is detached. FIG. 2 is a block diagram showing a functional configuration of the handheld terminal 10.

The handheld terminal 10 (information terminal) shown in FIG. 1A to FIG. 1C is an information terminal used in facilities such as stores including a supermarket, volume seller, or a warehouse storing merchandise. Such information terminal is operated by users in the facilities such as a clerk or a manager. The handheld terminal 10 includes at least a function to scan a symbol (barcode, two-dimensional code).

The handheld terminal 10 includes a handheld terminal main body 10A (terminal main body) and a battery 30 (battery device). As shown in FIG. 1A, on the front side, the handheld terminal 10A includes an operating unit 12 and a display 14 (predetermined device, display). The operating unit 12 includes a touch panel 121 and a key operating unit 122. The touch panel 121 is provided in a display screen of the display 14 and receives input according to touch by the user. The key operating unit 122 is a physical key which receives input according to key operation by the user. The key operating unit 122 includes, for example, a home key which displays a home screen, a back key to return to a display screen displayed one before, a trigger key to input to a scanner 17 to perform scanning, and a power key to receive input to turn on or turn off the power. The home key and the back key are provided on the front of the handheld terminal main body 10A, and the trigger key and the power key are provided on the side of the handheld terminal main body 10A.

The display 14 includes a display panel which is a liquid crystal display (LCD), and various displays are shown on the display panel.

As shown in FIG. 1B, on the back side, the handheld terminal main body 10A includes the scanner 17, an imaging unit 18, a flashing unit 19 (predetermined device), and battery attaching unit 22. The handheld terminal main body 10A shown in FIG. 1B is shown with a battery cover (not shown) detached, and the battery 30 as the battery device is attached to the battery attaching unit 22 with a detaching tape 221 in between.

The scanner 17 is an imaging unit which includes an imaging element such as a CMOS (Complementary Metal Oxide Semiconductor) imaging unit, and which images and reads a symbol as a subject. For example, the user faces the scanner 17 of the handheld terminal 10 to a symbol (barcode, two-dimensional code), the user presses the trigger key of the key operating unit 122, and the symbol is imaged and scanned.

The imaging unit 18 is a digital camera which includes an imaging element and which images a subject to generate image data. The flashing unit 19 includes an optical source such as a white light emitting diode (LED), and emits light to the subject when the imaging unit 18 images the subject.

The battery attaching unit 22 includes a terminal (not shown) where the battery 30 is attached and electrically connected to. The battery 30 is detachably attached to the battery attaching unit 22, and supplies power to each unit (device) of the handheld terminal main body 10A through the terminal of the battery attaching unit 22.

When the user pulls the detaching tape 221 in the handheld terminal 10 with the battery 30 attached as shown in FIG. 1B, the battery 30 is taken out from the battery attaching unit 22 of the handheld terminal main body 10A as shown in FIG. 1C. With this, the battery 30 can be exchanged in the handheld terminal 10.

Next, the functional configuration inside the handheld terminal 10 is described with reference to FIG. 2. As shown in FIG. 2, the handheld terminal 10 includes the handheld main body 10A and the battery 30. The hand held terminal main body 10A includes a central processing unit (CPU) 11 as a temperature measuring unit and a controller, the operating unit 12, the random access memory (RAM) 13, the display 14, a storage 15, a wireless communicating unit 16, the scanner 17, the imaging unit 18, the flashing unit 19, and a timekeeping unit 20. Each unit of the handheld terminal 10 is connected to each other through a bus 21. The battery 30 is attached to the handheld terminal main body 10A and connected to the bus 21.

The CPU 11 (controller) controls each unit of the handheld terminal 10. The CPU 11 reads the specified program from the system program and application programs stored in the storage 15 and deploys the program in the RAM 13. In coordination with the deployed program, the CPU 11 performs various processes. In the CPU 11, Android (registered trademark) OS (operating System) is executed as the system program, and various application programs are executed on the Android OS.

The operating unit 12 includes the touch panel 121 and the key operating unit 122. The operating unit 12 receives the touch input on the touch panel 121 and the key input on the key operating unit 122 from the user, and outputs the operation information to the CPU 11.

The RAM 13 is a volatile memory and forms a work area to temporarily store various data and programs.

The display 14 shows various displays on the display panel of the LCD according to the display information instructed from the CPU 11. The display 14 includes a backlight, a driver integrated circuit (IC), and a liquid crystal display panel (liquid crystal panel). The display 14 uses the backlight as the optical source, and uses the driver IC (driver) to control the on and off of the gate of the transistor in each pixel of the liquid crystal panel. The optical transmission of the liquid crystal in each pixel is controlled, and the image is displayed on the display 14.

According to control from the CPU 11, the display 14 can change a clock frequency of the driver IC. The CPU 11 sets the setting to a normal temperature setting (non-low temperature setting) if it is assumed that the temperature of the display 14 is a normal temperature higher than a low temperature in which trouble occurs in the display 14. The normal temperature setting (non-low temperature setting) is a setting to set the clock frequency of the driver IC to a clock frequency in which the display 14 operates normally in a normal temperature rather than the low temperature (here, -10°C, (first threshold) or lower, for example). In the normal temperature setting, if the display 14 is a low temperature -10°C or lower, the driver IC cannot pass electric current to turn on the gate of the transistor in each pixel, and trouble such as the display screen becoming white may occur. Therefore, if it is assumed that the temperature of the display 14 is a low temperature, the CPU 11 sets the setting to a low temperature setting. The low temperature setting is a setting in which the clock frequency of the driver IC becomes higher than the clock frequency of the normal temperature setting. Due to the low temperature setting to make the clock frequency of the driver IC in the display 14 higher, the current value which passes the gate of the transistor in each pixel can be increased, and the liquid crystal panel can display the screen without trouble in the display occurring. However, in the low temperature setting in which the clock frequency is high, decrease in the operation quality may occur, for example, unevenness in the display of the liquid crystal panel may occur, and the consumed electric current value may increase (decrease in display quality, increase in consumed electric current).

As described above, either one between the normal temperature setting and the low temperature setting is selectively applied in the display 14. The CPU 11 applies the normal temperature setting if it is determined that the temperature of the display 14 is the normal temperature (that is, a temperature higher than -10°C). If the low temperature setting is applied even if the temperature of the display 14 is the normal temperature, unnecessary decrease in the operation quality as described above may occur. The CPU 11 applies the low temperature setting if it is determined that the temperature of the display 14 is the low temperature (that is, a temperature equal to or lower than -10°C). If the normal temperature setting is applied even if the temperature of the display 14 is the low temperature, trouble in the display as described above may occur.

Preferably, when the temperature information of the display 14 cannot be accurately grasped, the low temperature setting is applied in the display 14. When the low temperature setting is applied, the decrease in the operation quality in the display 14 as described above occurs but the trouble in the display that occurs when the normal temperature setting is applied can be reliably avoided.

The storage 15 is a nonvolatile storage such as a flash memory which is able to read out information and which is rewritable. Various data and programs are stored in the storage 15. Specifically, the storage 15 stores as the application programs a display setting program P1 to perform the later-described display setting process and the flashing unit setting program P2 to perform the flashing unit setting process.

The wireless communicating unit 16 is a communicating unit which includes an antenna, a modulator/demodulator circuit, a signal processing circuit, and the like, and which communicates in a communication format using wireless LAN (Local Area Network) communication such as Wi-Fi (registered trademark). The CPU 11 performs wireless transmitting and receiving with an access point through the wireless communicating unit 16, and transmits and receives the information with the device as the communication destination connected to an access point by a network.

According to control by the CPU 11, the scanner 17 images the symbol as the subject to generate the image data, and the image data is output to the CPU 11. The CPU 11 decodes the image data of the symbol imaged by the scanner 17 and obtains the data included in the symbol. The scanner 17 can be a laser scanner which emits a laser beam to the barcode as the symbol, decodes the signal obtained by input of the reflected light, and obtains data included in the barcode.

According to control by the CPU 11, the imaging unit 18 images the subject to generate the image data and outputs the image data to the CPU 11.

According to control by the CPU 11, the flashing unit 19 emits light from the optical source to the direction of the subject when the imaging unit 18 images the subject. According to control by the CPU 11, the flash 19 can be set to available/unavailable. If the flashing unit 19 is a low temperature such as -10°C and set in the normal setting, the optical source may flicker and not emit light normally. Therefore, even if the flash is set to available, the imaged image data may be dark. In view of the above, preferably, the flash in the flashing unit 19 should be set to unavailable when the temperature is low. That is, similar to the display 14, if it is determined that the temperature of the flashing unit 19 is the normal temperature (that is, a temperature higher than -10°C), the CPU 11 applies the normal temperature setting to set the flash to available. If it is determined that the temperature of the flashing unit 19 is the low temperature (that is, a temperature equal to or lower than -10°C), the CPU 11 applies the low temperature setting to set the flash to unavailable.

The timekeeping unit 20 is a clock which keeps real time. The timekeeping unit 20 keeps the present date and time and outputs the date and time as the present date/time information to the CPU 11.

The battery 30 includes a battery main body (not shown) which is a rechargeable battery (secondary battery) such as a lithium ion battery and which supplies electric power, and a battery temperature sensor 301 (temperature sensor) as a temperature sensor or temperature detecting section. The battery temperature sensor 301 incudes a thermistor. The battery temperature sensor 301 detects the temperature of the battery 30 (battery temperature) and outputs the information of the detected battery temperature to the CPU 11.

According to the present embodiment, the temperature information output by the battery temperature sensor 301 is used in a battery monitoring process (not shown) which detects abnormal heat emission due to overcharge and over discharge in the battery 30. Further, the temperature information output by the battery temperature sensor 301 is used in the display setting process and the flashing unit setting process in which the CPU 11 determines which setting between the normal temperature setting and the low temperature setting is to be applied on the display 14 and the flashing unit 19. That is, the battery temperature sensor 301 is a sensor also used in a plurality of control processes.

According to the configuration to obtain the temperature information used in various control processes through the battery temperature sensor 301 included in the battery 30, the configuration of the terminal main body becomes simple compared to providing a temperature sensor in a circuit substrate in the terminal main body. Further, according to the configuration in which the temperature sensor is provided in the circuit substrate in the terminal main body, the temperature sensor is influenced by the heat emitting member such as the CPU 11. Therefore, the temperature information cannot be obtained correctly. Since such problems occur, the configuration of the present embodiment is required.

The handheld terminal 10 may also include a near distance communicating unit such as near field communication (NFC), a wireless communication unit such as a wireless wide area network (WAN) or Bluetooth (registered trademark), a sound input unit, and a sound output unit.

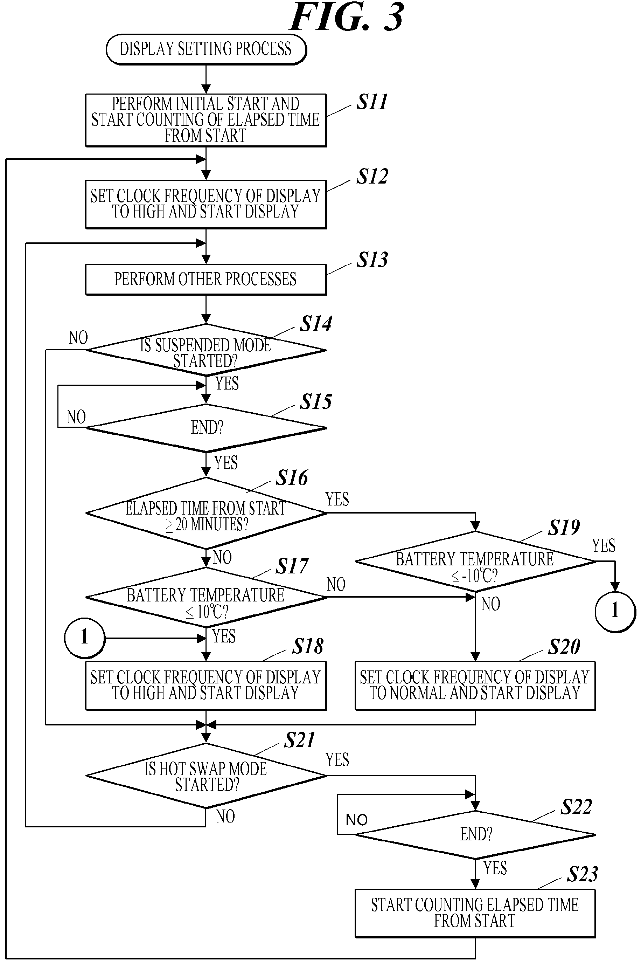

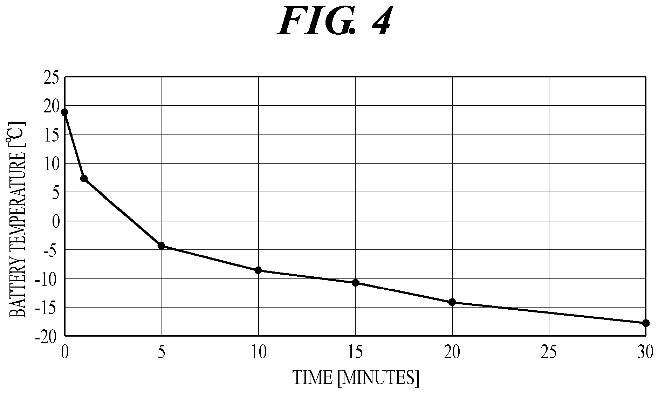

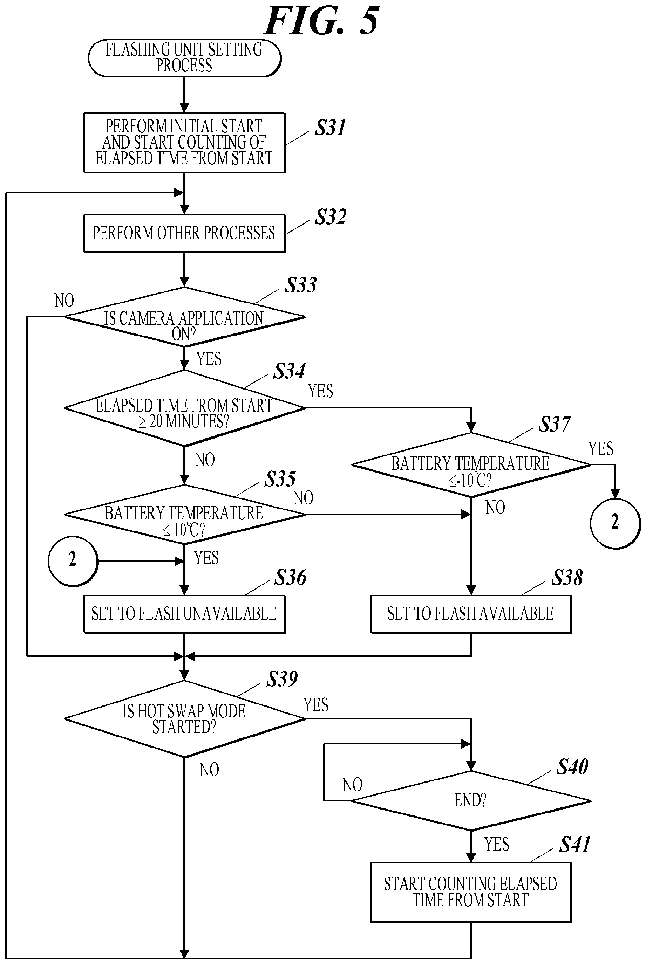

Next, with reference to FIG. 3 to FIG. 5, the operation of the handheld terminal 10 is described. FIG. 3 is a flowchart showing a display setting process. FIG. 4 is a diagram showing battery temperature with relation to time. FIG. 5 is a flowchart showing a flashing unit setting process.

With reference to FIG. 3, the display setting process performed in the handheld terminal 10 is described. First, as described above, it is assumed that the battery 30 is detachable from the handheld terminal main body 10A and can be exchanged. The handheld terminal 10 is to be in a shutdown state. When the user turns on the power through the power key on the operating unit 12 in the handheld terminal 10 in the shutdown state, this triggers the CPU 11 to perform the display setting process according to the display setting program P1 stored in the storage 15.

As shown in FIG. 3, first, the CPU 11 initially starts the handheld terminal 10, obtains the present date/time information from the timekeeping unit 20, and starts counting the amount of time that elapsed from the start (step S11).

Then, the CPU 11 sets the display 14 in a "clock frequency high" state in which the clock frequency of the driver IC is high as the low temperature setting of the display 14, and starts (restarts) the display of the display 14 (step S12).

Then, the CPU 11 performs other processes in the handheld terminal 10 (step S13). The other processes include processes other than setting of the display 14. Such processes include, for example, various processes which are performed together with the display of the display 14 and which are performed according to the input by the user through the operating unit 12.

Then, in step S13, the CPU 11 determines whether to start a suspended mode (pause mode) based on factors such as no operation on the operating unit 12 for a predetermined amount of time (step S14). The suspended mode is a pause mode in which the CPU 11 stops the display of the display 14, the CPU 11 stands by for input of operation from the user through the operating unit 12 at the end of the suspended mode, and the process performed is suppressed to a minimum.

If the suspended mode starts (step S14; YES), for example, the CPU 11 determines whether the suspended mode ends based on factors such as whether there is input to end the suspended mode on the operating unit 12 (step S15). If the process does not end (step S15; NO), the process advances to step S15. During the suspended mode, the CPU 11 performs the processes performed in the suspended mode.

If the suspended mode ends (step S15; YES), the CPU 11 determines whether the amount of time that elapsed from start being counted is 20 minutes or longer (step S16). When the suspended mode ends, the state right before the suspended mode is resumed. If the amount of time that elapsed from start is shorter than 20 minutes (step S16; NO), the CPU 11 obtains the battery temperature of the battery 30 from the battery temperature sensor 301 and determines whether the obtained battery temperature is equal to or lower than 10°C (second threshold).

If the battery temperature is equal to or lower than 10°C (step S17; YES), as the low temperature setting for the display 14, the CPU 11 sets the clock frequency of the driver IC in the display 14 in a "clock frequency high" state in which the setting is higher than the normal temperature setting, and starts (resumes) the display of the display 14 (step S18).

If the amount of time that elapsed from the start is 20 minutes or longer (step S16; YES), the CPU 11 obtains the battery temperature of the battery 30 from the battery temperature sensor 301, and determines whether the obtained battery temperature is equal to or lower than -10°C (step S19). If the obtained battery temperature is equal to or lower than -10°C (step S19; YES), the process advances to step S18.

If the battery temperature is higher than -10°C (step S19; NO), or the battery temperature is higher than 10°C (step S17; NO), as the normal temperature setting for the display 14, the CPU 11 sets the clock frequency of the driver IC in the display 14 to "clock frequency normal" which is a normal value as the normal temperature setting of the display 14, and starts (resumes) the display of the display 14 (step S20).

Due to the nature of the Android OS executed in the handheld terminal 10, the setting (display setting value) of the display 14 cannot be changed while the display 14 is not displayed. Therefore, as shown in step S14 and S15, the timing that the setting of the display 14 is changed is when the suspended mode ends, that is, when the display 14 starts the display.

The battery 30 can be detached from the handheld terminal main body 10A and can be exchanged. The battery 30 attached to the handheld terminal 10 used in the low temperature may be exchanged with the charged battery 30 in a normal temperature. Therefore, the temperature between the handheld terminal main body 10A and the battery 30 may be greatly different. That is, in conventional control based on the battery temperature, if the determination is made with the threshold as, for example, -10°C, even if the handheld terminal main body 10A is cold with a temperature of, for example, -20°C and the low temperature setting should be applied, if the battery 30 is warm with a temperature of, for example, 18°C, the normal temperature setting may be applied.

According to the present embodiment, first, as shown in step S11, in boot start (initial start) from the shutdown state, the battery temperature cannot be determined before the display 14 is displayed. Therefore, only if the start is such initial start, the display 14 is always set to the low temperature setting in step S12.

After the initial start, when the suspended mode starts and then the suspended mode ends, the battery temperature of the battery 30 is referred and the setting applied to the display 14 is set to either the normal temperature setting or the low temperature setting in steps S17 and S19. Here, when the amount of time that elapsed from the initial start is shorter than 20 minutes, the threshold of the battery temperature is set to 10°C, and when the temperature is equal to or lower than 10°C, the low temperature setting is applied. After 20 minutes pass from the start, the threshold of the battery temperature is set to -10°C. With reference to FIG. 4, the reason why the threshold of the battery temperature is provided in two levels is described.

In FIG. 4, as an example of the battery temperature of the battery 30 in a room, the temperature is to be 18°C. FIG. 4 shows the measured value (°C) of the battery temperature of the battery 30 with relation to time that elapsed (minutes) after attaching the battery 30 at 18°C to the handheld terminal main body 10A at -20°C. In Fig. 4, first, there is a difference in the temperature with relation to the handheld terminal main body 10A at -20°C. After 15 minutes pass, the battery temperature becomes - 11°C. After 20 minutes pass, the battery temperature reaches -14°C, and this is almost the same temperature as the handheld terminal main body 10A.

The amount of time necessary to start the handheld terminal 10 is about 50 seconds. According to the measurement value in FIG. 4, the battery temperature is to be 7°C after start, and the threshold of the battery temperature is 10°C for 20 minutes after the initial start in step S17. That is, if the battery temperature obtained at this point is higher than 10°C, the temperature of the actual terminal (handheld terminal main body 10A) can be considered to be higher than 10°C. Therefore, the low temperature setting set from the start (or when the later described hot swap mode ends) can be changed to the normal temperature setting at this point. If the battery temperature obtained at this point is lower than 10°C, the actual temperature of the terminal may be -10°C or lower, and therefore, the low temperature setting is maintained. When 20 minutes or more pass after start (or when the later described hot swap mode ends), it can be considered that the battery temperature of the battery 30 is the same as the actual temperature of the terminal. Therefore, the threshold of the battery temperature is set to -10°C which is the temperature in which the display trouble of the display 14 due to low temperature may occur. According to the control providing the threshold of the battery temperature in two levels according to the amount of time that elapsed, when the temperature of the terminal is a predetermined temperature or higher than the temperature in which the display trouble may occur (10°C or higher in FIG. 4), even if the amount of time that elapsed is not yet the amount of time needed to be able to consider that the battery temperature is the same as the temperature of the terminal main body (20 minutes in FIG. 4), the setting can be changed from the low temperature setting to the normal temperature setting at an early point.

Returning to FIG. 3, after step S18 or step S20, or if the suspended mode is not started (step S14; NO), the CPU 11 determines whether to start the hot swap mode in response to input of an instruction to start the hot swap mode from the user through the operating unit 12 (step S21). The hot swap mode is a mode to exchange the battery 30 while maintaining the state of the memory of the handheld terminal 10. In this mode, the sub battery (not shown) internally included in the handheld terminal main body 10A supplies to each unit power necessary to maintain the state of the memory of the handheld terminal main body 10A during the exchange of the battery 30. When the hot swap mode starts, the user exchanges the battery 30 attached to the handheld terminal main body 10A with the charged battery 30. If the hot swap mode does not start (step S21; NO), the process advances to step S13.

If the hot swap mode starts (step S21; YES), the CPU 11 determines whether to end the hot swap mode in response to the input of the instruction to end the hot swap mode from the user through the operating unit 12 (step S22). If the hot swap mode does not end (step S22; NO), the process advances to step S22. If the hot swap mode ends (step S22; YES), the CPU 11 obtains the present date/time information from the timekeeping unit 20, and starts a new count of the amount of time that elapsed from starting (step S23). Then, the process advances to step S12. When the hot swap mode ends, the state resumes to the state right before the hot swap mode.

When the battery 30 is exchanged in the hot swap mode, the temperature between the handheld terminal main body 10A and the battery 30 may be greatly different, and the setting is always set to the low temperature setting similar to the initial start. Then, similar to the initial start, if the amount of time that elapsed is shorter than 20 minutes from the end of the hot swap mode, the threshold of the battery temperature is 10°C, and then the threshold of the battery temperature is -10°C.

Here, table I shows the contents of the setting for the display 14 in the display setting process when in the states after turning on the power (initial start) or after the end of the hot swap mode, the end of the suspended mode (time that elapsed after start being 0 to shorter than 20 minutes), and the end of the suspended mode (time that elapsed after start being 20 minutes or longer) with relation to the battery temperature of the battery 30 with thresholds in two levels (10°C, -10°C) .

**Table 1**

| BATTERY TEMPERATURE | AFTER POWER ON OR AFTER HOT SWAP | SUSPENDED MODE END (ELAPSED TIME, 0 TO 20 MINUTES) | SUSPENDED MODE END (ELAPSED TIME, MORE THAN 20 MINUTES) |
|---|---|---|---|
| ∼-10°C | LOW TEMPERATURE SETTING | LOW TEM SET PERATURE TTING | LOW TEMPERATURE SETTING |
| -10°C∼10°C | LOW TEMPERATURE SETTING | LOW TEMPERATURE SETTING | NORMAL TEMPERATURE SETTING |
| 10°C∼ | LOW TEMPERATURE SETTING | NORMAL TEMPERATURE SETTING | NORMAL TEMPERATURE SETTING |

It is assumed that when the handheld terminal 10 including the Android OS is used, the start and the end of the suspended mode are often repeated to suppress unnecessary power consumption. Therefore, it is assumed that it is rare that the handheld terminal 10 used in the normal temperature is always set to the low temperature setting. The result shown in FIG. 4 shows the result when the handheld terminal 10 is not operated. If the handheld terminal 10 is operated, the temperature of the handheld terminal 10 itself rises due to its own heat emission, and the temperature becomes higher than the battery temperature (-10°C) in which the display trouble occurs in the display 14. Depending on the battery temperature, there is a possibility that the operation quality of the display 14 decreases to some extent for only the first 20 minutes due to the low temperature setting. However, after the amount of time passes, the operation quality will be normal. Therefore, if the above control is performed, at least the trouble in the display of the display 14 does not occur. According to the above process, the setting of the display 14 can be suitably controlled even if the battery 30 is exchanged in a configuration in which the temperature information is obtained by the battery temperature sensor 301.

Next, with reference to FIG. 5, the flashing unit setting process executed in the handheld terminal 10 is described. The handheld terminal 10 is to be in a shutdown state. When the user turns on the power through the power key on the operating unit 12 in the handheld terminal 10 in the shutdown state, this triggers the CPU 11 to perform the flashing unit setting process according to the flashing unit setting program P2 stored in the storage 15.

As shown in FIG. 5, steps S31 and S32 are similar to steps S11 and S13 in the display setting process shown in FIG. 3. Then, the CPU 11 determines whether the application program of the camera to perform the imaging of the subject with the imaging unit 18 is on (perform) (step S33) .

If the application program of the camera is on (step S33; YES), step S34 is performed. Steps S34, S36, and S37 are similar to steps S16, S17, and S19 shown in FIG. 3. If the battery temperature is 10°C or lower (step S35; YES), the CPU 11 sets the state to "flash unavailable" in which the driving (flashing) of the flashing unit 19 is not available as the low temperature setting of the flashing unit 19 (step S36). In step S36, the CPU 11 may display on the display 14 the display information showing that the flashing unit 19 is set to flash unavailable.

If the battery temperature is higher than -10°C (step S37; NO), or if the battery temperature is higher than 10°C (step S35; NO), the CPU 11 sets the state to "flash available" in which the driving (flashing) of the flashing unit 19 is available as the normal temperature setting of the flashing unit 19 (step S38). Steps S39 to S41 are similar to steps S21 to S23 shown in FIG. 3. According to the above process, the setting of the flashing unit 19 can be suitably controlled even if the battery 30 is exchanged in a configuration in which the temperature information is obtained by the battery temperature sensor 301.

Here, table II shows the contents of the setting for the flashing unit 19 in the flashing unit setting process when in the states after turning on the power (initial start) or after the end of the hot swap mode, after the camera application program is turned on (time that elapsed after start being 0 to shorter than 20 minutes), and after the camera application program is turned on (time that elapsed after start being 20 minutes or longer) with relation to the battery temperature of the battery 30 with thresholds in two levels (10°C, -10°C) .

**Table 2**

| BATTERY TEMPERATURE | AFTER POWER ON OR AFTER HOT SWAP | CAMERA APPLICATION ON (ELAPSED TIME, 0 TO 20 MINUTES) | CAMERA APPLICATION ON (ELAPSED TIME, MORE THAN 20 MINUTES) |
|---|---|---|---|
| ∼-10°C | FLASH UNAVAILABLE | FLASH UNAVAILABLE | FLASH UNAVAILABLE |
| -10°C∼10°C | FLASH UNAVAILABLE | FLASH UNAVAILABLE | FLASH AVAILABLE |
| 10°C∼ | FLASH UNAVAILABLE | FLASH AVAILABLE | FLASH AVAILABLE |

According to the above-described embodiment, the handheld terminal 10 is an information terminal in which the battery device (battery 30) can be detached from the handheld terminal main body 10A and which includes a predetermined device (display 14 and flashing unit 19) different from the battery 30 in the handheld terminal main body 10A. The handheld terminal 10 includes a CPU 11. The CPU 11 obtains the temperature information output from the battery temperature sensor 301 provided in the battery 30, and measures the temperature of the battery 30. The CPU 11 performs setting of the display 14 and the flashing unit 19 based on the amount of time that elapsed after the handheld terminal 10 is started or after the hot swap mode in which the battery 30 can be exchanged ends, and the measured temperature of the battery 30.

The handheld terminal 10 is an information terminal in which the battery 30 can be detached from the handheld terminal main body 10A and which includes the predetermined device (display 14, flashing unit 19) in the handheld terminal main body 10A. The handheld terminal 10 includes the CPU 11 which sets the device based on the battery temperature sensor 301 which detects the battery temperature of the attached battery 30, the amount of time that elapsed from when the handheld terminal 10 starts or when the hot swap mode in which the battery 30 can be exchanged ends and the detected battery temperature.

Therefore, the device of the handheld terminal main body 10A can be set in a suitable state according to the amount of time that elapsed from the start and the battery temperature, without considering the temperature difference between the battery 30 and the handheld terminal main body 10A.

The CPU 11 sets the device based on the plurality of thresholds of the battery temperature set according to the amount of time that elapsed from the start of the handheld terminal 10 or the end of the hot swap mode, and the detected battery temperature. Therefore, the device can be easily set to a suitable state by comparing the detected battery temperature with the plurality of thresholds of the battery temperature set according to the amount of time that elapsed from the start of the handheld terminal 10 or the end of the hot swap mode.

If the amount of time that elapsed from the start of the handheld terminal 10 starts or the hot swap mode ends is a predetermined amount of time (20 minutes) or longer and the detected battery temperature is -10°C or lower, the CPU 11 sets the device to the setting for low temperature. Therefore, the user who uses the handheld terminal 10 in an environment with normal temperatures or high temperatures (higher than -10°C) can use the handheld terminal 10 without the operation quality of the device decreasing, and the user who uses the handheld terminal 10 in the environment with low temperatures (-10°C or lower) can use the handheld terminal 10 without trouble in the operation of the device.

If the amount of time that elapsed from the start of the handheld terminal 10 or the end of the hot swap mode is shorter than a predetermined amount of time (20 minutes) and the detected battery temperature is higher than -10° and equal to or lower than 10°C, the CPU 11 sets the device to the setting for the low temperature. Therefore, even if the amount of time that elapsed from the start of the handheld terminal 10 or the end of the hot swap mode is shorter than the predetermined amount of time (20 minutes), the user who uses the handheld terminal 10 in an environment with normal temperatures or high temperatures (higher than 10°C) can use the handheld terminal 10 without the decrease in the operation quality of the device, and the user who uses the handheld terminal 10 in an environment which may have low temperatures (equal to or lower than 10°C) can use the handheld terminal 10 without trouble in the device.

The device is the display 14. The CPU 11 sets the clock frequency of the driver IC in the display 14 to a high setting as the setting for low temperature. Therefore, when the temperature is low, although there may be some decrease in the quality of the operation of the display 14, the handheld terminal 10 can be used without trouble in the display 14.

When the suspended mode which stops the display of the display 14 ends, the display 14 is set based on the plurality of thresholds of the battery temperature set according to the amount of time that elapsed from the start of the handheld terminal 10 or from the end of the hot swap mode and the detected battery temperature. Therefore, even if the handheld terminal 10 operates in the Android OS, the display 14 of the handheld terminal main body 10A can be set in the suitable state without considering the temperature difference between the battery 30 and the handheld terminal main body 10A.

The device is the flashing unit 19. The CPU 11 sets the flashing unit 19 to unavailable as the low temperature setting. Therefore, the flashing unit 19 can be set to unavailable at the low temperature and the handheld terminal 10 can be used without trouble in the light emitting.

The description of the above described embodiments are examples of the information terminal, control method and computer program according to the present invention, and the present invention is not limited to the above.

For example, the device is set to the setting for the normal temperature (step S20 or S38) if the battery temperature is higher than 10°C (step S17 or S35; NO) in the display setting process shown in FIG. 3 and the flashing unit setting process shown in FIG. 5 according to the present embodiment, but the process is not limited to the above. In an embodiment not covered by the claimed invention, the device can be set to a setting for low temperature (step S18 or S36) regardless of the detected battery temperature if the amount of time that elapsed from the start is shorter than the predetermined amount of time (20 minutes).

There are two types of thresholds 10°C and -10°C as the threshold of the battery temperature corresponding to the predetermined amount of time (20 minutes) as the threshold of the amount of time that elapsed from the start in the display setting process shown in FIG. 3 and the flashing unit setting process shown in FIG. 5 according to the present embodiment, but the process is not limited to the above. For example, in an embodiment not covered by the claimed invention, the predetermined amount of time can be set in a plurality of settings as the threshold of the amount of time that elapsed from the start, and at least one threshold of the battery temperature is set corresponding to each predetermined amount of time.

In step S36 in the flashing unit setting process shown in FIG. 5 according to the present embodiment, the driving (flashing) of the flashing unit 19 is set to unavailable but the process is not limited to the above. For example, a notification showing that the flashing unit may not flash properly may be displayed on the display 14 and the user may select whether to set the driving (flashing) of the flashing unit 19 to available or unavailable. Similarly in step S38, the setting of available/unavailable for the driving (flashing) of the flashing unit 19 can be selected by the user. In step S38, it is determined that there is no possibility that the flashing unit 19 will not operate properly due to the temperature. Therefore, the determination result does not have to be notified.

According to the present embodiment, the low temperature setting is applied based on the battery temperature, but the process is not limited to the above and, in an embodiment not covered by the claimed invention, the setting for high temperature can be applied, for example. In this case, in step S19 (S37) in the flow shown in FIG. 3 (FIG. 5), it is determined whether the battery temperature is a predetermined first temperature (third threshold) or higher, and in step S17 (S35) it is determined whether the battery temperature is equal to or higher than a second temperature (fourth threshold) which is lower than the first temperature. Then, in step S18 (S36), the setting for high temperature can be applied to the predetermined device. That is, when the predetermined setting is applied to the device of the terminal apparatus based on the battery temperature, the present invention can be applied.

According to the present embodiment, the amount of time that elapsed from after the power is turned on or after the hot swap is counted as the timing that the battery 30 may have been exchanged but the timing is not limited to the above. In an embodiment not covered by the claimed invention, the configuration may be able to determine whether the battery is actually exchanged, and the elapsed time may be counted only when the battery is actually exchanged. As the method to determine whether the battery 30 is actually exchanged, for example, it is possible to determine whether the charged state of the battery 30 greatly changed (changed in a predetermined threshold or larger).

According to the present embodiment, the battery 30 is a rechargeable battery such as a lithium ion battery, but the battery is not limited to the above, and any battery including a temperature sensor such as a thermistor can be used.

According to the present embodiment, the devices to be set according to the battery temperature and the amount of time that elapsed from the start are to be the display 14 and the flashing unit 19, but the devices are not limited to the above. The devices set according to the battery temperature and the amount of time that elapsed from the start can be other devices in the handheld terminal main body 10A such as a wireless communicating unit for Wi-Fi.

According to the present embodiment, the handheld terminal 10 as the information terminal is used, but the present invention is not limited to the above. For example, the information terminal may be other information terminals which are driven by a battery and in which the battery is detachable or exchangeable, for example, smartphones and tablet personal computers (PC).

## Claims

1. An information terminal (10) in which a battery device (30) is attached to a terminal main body (10A) detachably and which includes a predetermined device (14, 19) separate from the battery device (30) in the terminal main body (10A), the information terminal comprising:
a temperature measuring unit (11) which is configured to obtain temperature information output from a temperature sensor (301) provided in the battery device (30) and which is configured to measure a temperature of the battery device (30),
a controller (11) which is configured to set the predetermined device (14, 19) based on an amount of time that elapsed from when the information terminal (10) starts or when a hot swap mode in which the battery device (30) can be exchanged ends and the measured temperature of the battery device (30),
wherein the controller (11) is configured to set the predetermined device (14, 19) to a setting for low temperature in response to the amount of time that elapsed from when the information terminal (10) starts or the hot swap mode ends being equal to or longer than a predetermined amount of time and the measured temperature of the battery device (30) being equal to or lower than a first threshold,
wherein the controller (11) is configured to set the predetermined device (14, 19) to the setting for low temperature in response to the amount of time that elapsed from when the information terminal (10) starts or the hot swap mode ends being shorter than the predetermined amount of time and the measured temperature of the battery device (30) being equal to or lower than a second threshold,
wherein the controller (11) is configured to set the predetermined device (14, 19) to a setting for high temperature in response to the amount of time that elapsed from when the information terminal (10) starts or the hot swap mode ends being equal to or longer than the predetermined amount of time and the measured temperature of the battery device (30) being higher than the first threshold, and
wherein the controller (11) is configured to set the predetermined device (14, 19) to the setting for high temperature in response to the amount of time that elapsed from when the information terminal (10) starts or the hot swap mode ends being shorter than the predetermined amount of time and the measured temperature of the battery device (30) being higher than the second threshold which is higher than the first threshold.

2. The information terminal (10) according to claim 1, wherein,
the predetermined device (14, 19) is a display (14), and
the controller (11) is configured to set a clock frequency of a driver of the display (14) to a high setting as the setting for the low temperature.

3. The information terminal (10) according to claim 2 wherein, when a suspended mode which stops display on the display 14 ends, the controller (11) is configured to set the display (14) based on the first and the second threshold of the temperature of the battery device (30) and based on the amount of time that elapsed from when the information terminal (10) starts or when the hot swap mode ends and the measured temperature of the battery device (30).

4. The information terminal (10) according to claim 1, wherein,
the predetermined device (14, 19) is a flashing unit (19) in an imaging unit (18), and
the controller (11) is configured to set the flashing unit (19) to unavailable as the setting for low temperature.

5. The information terminal (10) according to claim 4 wherein, when an application to use the imaging unit (18) is executed, the controller (11) is configured to set the flashing unit (19) based on the first and the second threshold of the temperature of the battery device (30) and based on the amount of time that elapsed from when the information terminal (10) starts or the hot swap mode ends and the measured temperature of the battery device (30).

6. The information terminal (10) according to claim 1, wherein the controller (11) is configured to obtain present date and time information from a timekeeping unit (20) and is configured to start measuring the elapsed time at a timing when the information terminal (10) starts and a timing when the hot swap mode ends.

7. The information terminal (10) according to any one of claims 1 to 6 wherein the temperature sensor (301) is a thermistor.

8. The information terminal (10) according to any one of claims 1 to 7 wherein the battery device (30) is a lithium ion battery.

9. A control method executed in an information terminal (10) in which a battery device (30) is attached to a terminal main body (10A) detachably and which includes a predetermined device (14, 19) separate from the battery device (30) in the terminal main body (10A), the method comprising:
obtaining temperature information output from a temperature sensor (301) provided in the battery device (30) and measuring a temperature of the battery device (30) (S17, S19, S35, S37),
setting the predetermined device (14, 19) based on an amount of time that elapsed from when the information terminal (10) starts or when a hot swap mode in which the battery device (30) can be exchanged ends and the measured temperature of the battery device (30) (S18, S20, S36, S38),
setting the predetermined device (14, 19) to a setting for low temperature in response to the amount of time that elapsed from when the information terminal (10) starts or the hot swap mode ends being equal to or longer than a predetermined amount of time and the measured temperature of the battery device (30) being equal to or lower than a first threshold,
setting the predetermined device (14, 19) to the setting for low temperature in response to the amount of time that elapsed from when the information terminal (10) starts or the hot swap mode ends being shorter than the predetermined amount of time and the measured temperature of the battery device (30) being equal to or lower than a second threshold,
setting the predetermined device (14, 19) to a setting for high temperature in response to the amount of time that elapsed from when the information terminal (10) starts or the hot swap mode ends being equal to or longer than the predetermined amount of time and the measured temperature of the battery device (30) being higher than the first threshold, and
setting the predetermined device (14, 19) to the setting for high temperature in response to the amount of time that elapsed from when the information terminal (10) starts or the hot swap mode ends being shorter than the predetermined amount of time and the measured temperature of the battery device (30) being higher than the second threshold which is higher than the first threshold.

10. A computer program to be executed by a processor (11) in an information terminal (10) in which a battery device (30) is attached to a terminal main body (10A) detachably and which includes a predetermined device (14, 19) separate from the battery device (30) in the terminal main body (10A), the program controlling the processor (11) to perform:
obtaining temperature information output from a temperature sensor (301) provided in the battery device (30) and measuring a temperature of the battery device (30) (S17, S19, S35, S37),
setting the predetermined device (14, 19) based on an amount of time that elapsed from when the information terminal (10) starts or when a hot swap mode in which the battery device (30) can be exchanged ends and the measured temperature of the battery device (30) (S18, S20, S36, S38),
setting the predetermined device (14, 19) to a setting for low temperature in response to the amount of time that elapsed from when the information terminal (10) starts or the hot swap mode ends being equal to or longer than a predetermined amount of time and the measured temperature of the battery device (30) being equal to or lower than a first threshold,
setting the predetermined device (14, 19) to the setting for low temperature in response to the amount of time that elapsed from when the information terminal (10) starts or the hot swap mode ends being shorter than the predetermined amount of time and the measured temperature of the battery device (30) being equal to or lower than a second threshold,
setting the predetermined device (14, 19) to a setting for high temperature in response to the amount of time that elapsed from when the information terminal (10) starts or the hot swap mode ends being equal to or longer than the predetermined amount of time and the measured temperature of the battery device (30) being higher than the first threshold, and
setting the predetermined device (14, 19) to the setting for high temperature in response to the amount of time that elapsed from when the information terminal (10) starts or the hot swap mode ends being shorter than the predetermined amount of time and the measured temperature of the battery device (30) being higher than the second threshold which is higher than the first threshold.

## Patentansprüche

1. Informationsendgerät (10), in dem eine Batterievorrichtung (30) abnehmbar an einem Endgerätehauptkörper (10A) angebracht ist und das eine vorbestimmte Vorrichtung (14, 19) aufweist, die von der Batterievorrichtung (30) in dem Endgerätehauptkörper (10A) getrennt ist, wobei das Informationsendgerät umfasst:
eine Temperaturmesseinheit (11), die so konfiguriert ist, dass sie Temperaturinformationen erhält, die von einem in der Batterievorrichtung (30) vorgesehenen Temperatursensor (301) ausgegeben werden, und die so konfiguriert ist, dass sie eine Temperatur der Batterievorrichtung (30) misst,
eine Steuerung (11), die so konfiguriert ist, dass sie die vorbestimmte Vorrichtung (14, 19) basierend auf einer Zeitspanne, die seit dem Start des Informationsendgeräts (10) oder dem Ende eines Hot-Swap-Modus, in dem die Batterievorrichtung (30) ausgetauscht werden kann, verstrichen ist, und der gemessenen Temperatur der Batterievorrichtung (30) einstellt,
wobei die Steuerung (11) so konfiguriert ist, dass sie die vorbestimmte Vorrichtung (14, 19) auf eine Einstellung für niedrige Temperatur als Reaktion darauf einstellt, dass die Zeitspanne, die seit dem Start des Informationsendgeräts (10) oder dem Ende des Hot-Swap-Modus verstrichen ist, gleich oder länger als eine vorbestimmte Zeitspanne ist und die gemessene Temperatur der Batterievorrichtung (30) gleich oder niedriger als ein erster Schwellenwert ist,
wobei die Steuerung (11) so konfiguriert ist, dass sie die vorbestimmte Vorrichtung (14, 19) auf die Einstellung für niedrige Temperatur als Reaktion darauf einstellt, dass die Zeitspanne, die seit dem Start des Informationsendgeräts (10) oder dem Ende des Hot-Swap-Modus verstrichen ist, kürzer als die vorbestimmte Zeitspanne ist und die gemessene Temperatur der Batterievorrichtung (30) gleich oder niedriger als ein zweiter Schwellenwert ist,
wobei die Steuerung (11) so konfiguriert ist, dass sie die vorbestimmte Vorrichtung (14, 19) auf eine Einstellung für hohe Temperatur als Reaktion darauf einstellt, dass die Zeitspanne, die seit dem Start des Informationsendgeräts (10) oder dem Ende des Hot-Swap-Modus verstrichen ist, gleich oder länger als die vorbestimmte Zeitspanne ist und die gemessene Temperatur der Batterievorrichtung (30) höher als der erste Schwellenwert ist, und
wobei die Steuerung (11) so konfiguriert ist, dass sie die vorbestimmte Vorrichtung (14, 19) auf die Einstellung für hohe Temperatur als Reaktion darauf einstellt, dass die Zeitspanne, die seit dem Start des Informationsendgeräts (10) oder dem Ende des Hot-Swap-Modus verstrichen ist, kürzer als die vorbestimmte Zeitspanne ist und die gemessene Temperatur der Batterievorrichtung (30) höher als der zweite Schwellenwert ist, der höher als der erste Schwellenwert ist.

2. Informationsendgerät (10) nach Anspruch 1, wobei,
die vorbestimmte Vorrichtung (14, 19) eine Anzeige (14) ist, und
die Steuerung (11) so konfiguriert ist, dass sie eine Taktfrequenz eines Treibers der Anzeige (14) auf eine hohe Einstellung als die Einstellung für die niedrige Temperatur einstellt.

3. Informationsendgerät (10) nach Anspruch 2, wobei, wenn ein Aussetzmodus, der die Anzeige auf der Anzeige (14) stoppt, endet, die Steuerung (11) so konfiguriert ist, dass sie die Anzeige (14) basierend auf dem ersten und dem zweiten Schwellenwert der Temperatur der Batterievorrichtung (30) und basierend auf der Zeitspanne, die seit dem Start des Informationsendgeräts (10) oder dem Ende des Hot-Swap-Modus verstrichen ist, und der gemessenen Temperatur der Batterievorrichtung (30) einstellt.

4. Informationsendgerät (10) nach Anspruch 1, wobei,
die vorbestimmte Vorrichtung (14, 19) eine Blinkeinheit (19) in einer Abbildungseinheit (18) ist, und
die Steuerung (11) so konfiguriert ist, dass sie die Blinkeinheit (19) auf nicht verfügbar als die Einstellung für niedrige Temperatur einstellt.

5. Informationsendgerät (10) nach Anspruch 4, wobei, wenn eine Anwendung zur Verwendung der Abbildungseinheit (18) ausgeführt wird, die Steuerung (11) so konfiguriert ist, dass sie die Blinkeinheit (19) basierend auf dem ersten und dem zweiten Schwellenwert der Temperatur der Batterievorrichtung (30) und basierend auf der Zeitspanne, die seit dem Start des Informationsendgeräts (10) oder dem Ende des Hot-Swap-Modus verstrichen ist, und der gemessenen Temperatur der Batterievorrichtung (30) einstellt.

6. Informationsendgerät (10) nach Anspruch 1, wobei die Steuerung (11) so konfiguriert ist, dass sie aktuelle Datums- und Zeitinformationen von einer Zeitmesseinheit (20) erhält, und so konfiguriert ist, dass sie mit der Messung der verstrichenen Zeit zu einem Zeitpunkt beginnt, wenn das Informationsendgerät (10) startet, und zu einem Zeitpunkt, wenn der Hot-Swap-Modus endet.

7. Informationsendgerät (10) nach einem der Ansprüche 1 bis 6, wobei der Temperatursensor (301) ein Thermistor ist.

8. Informationsendgerät (10) nach einem der Ansprüche 1 bis 7, wobei die Batterievorrichtung (30) eine Lithium-Ionen-Batterie ist.

9. Steuerungsverfahren, das in einem Informationsendgerät (10) ausgeführt wird, in dem eine Batterievorrichtung (30) abnehmbar an einem Endgerätehauptkörper (10A) angebracht ist und das eine vorbestimmte Vorrichtung (14, 19) aufweist, die von der Batterievorrichtung (30) in dem Endgerätehauptkörper (10A) getrennt ist, wobei das Verfahren umfasst:
Erhalten von Temperaturinformationen, die von einem in der Batterievorrichtung (30) vorgesehenen Temperatursensor (301) ausgegeben werden, und Messen einer Temperatur der Batterievorrichtung (30) (S17, S19, S35, S37),
Einstellen der vorbestimmten Vorrichtung (14, 19) basierend auf einer Zeitspanne, die seit dem Start des Informationsendgeräts (10) oder dem Ende eines Hot-Swap-Modus, in dem die Batterievorrichtung (30) ausgetauscht werden kann, verstrichen ist, und der gemessenen Temperatur der Batterievorrichtung (30) (S18, S20, S36, S38),
Einstellen der vorbestimmten Vorrichtung (14, 19) auf eine Einstellung für niedrige Temperatur als Reaktion darauf, dass die Zeitspanne, die seit dem Start des Informationsendgeräts (10) oder dem Ende des Hot-Swap-Modus verstrichen ist, gleich oder länger als eine vorbestimmte Zeitspanne ist und die gemessene Temperatur der Batterievorrichtung (30) gleich oder niedriger als ein erster Schwellenwert ist,
Einstellen der vorbestimmten Vorrichtung (14, 19) auf die Einstellung für niedrige Temperatur als Reaktion darauf, dass die Zeitspanne, die seit dem Start des Informationsendgeräts (10) oder dem Ende des Hot-Swap-Modus verstrichen ist, kürzer als die vorbestimmte Zeitspanne ist und die gemessene Temperatur der Batterievorrichtung (30) gleich oder niedriger als ein zweiter Schwellenwert ist,
Einstellen der vorbestimmten Vorrichtung (14, 19) auf eine Einstellung für hohe Temperatur als Reaktion darauf, dass die Zeitspanne, die seit dem Start des Informationsendgeräts (10) oder dem Ende des Hot-Swap-Modus verstrichen ist, gleich oder länger als die vorbestimmte Zeitspanne ist und die gemessene Temperatur der Batterievorrichtung (30) höher als der erste Schwellenwert ist, und
Einstellen der vorbestimmten Vorrichtung (14, 19) auf die Einstellung für hohe Temperatur als Reaktion darauf, dass die Zeitspanne, die seit dem Start des Informationsendgeräts (10) oder dem Ende des Hot-Swap-Modus verstrichen ist, kürzer als die vorbestimmte Zeitspanne ist und die gemessene Temperatur der Batterievorrichtung (30) höher als der zweite Schwellenwert ist, der höher als der erste Schwellenwert ist.

10. Computerprogramm, das von einem Prozessor (11) in einem Informationsendgerät (10) auszuführen ist, in dem eine Batterievorrichtung (30) abnehmbar an einem Endgerätehauptkörper (10A) angebracht ist und das eine vorbestimmte Vorrichtung (14, 19) aufweist, die von der Batterievorrichtung (30) in dem Endgerätehauptkörper (10A) getrennt ist, wobei das Programm den Prozessor (11) steuert, um folgendes durchzuführen:
Erhalten von Temperaturinformationen, die von einem in der Batterievorrichtung (30) vorgesehenen Temperatursensor (301) ausgegeben werden, und Messen einer Temperatur der Batterievorrichtung (30) (S17, S19, S35, S37),
Einstellen der vorbestimmten Vorrichtung (14, 19) basierend auf einer Zeitspanne, die seit dem Start des Informationsendgeräts (10) oder dem Ende eines Hot-Swap-Modus, in dem die Batterievorrichtung (30) ausgetauscht werden kann, verstrichen ist, und der gemessenen Temperatur der Batterievorrichtung (30) (S18, S20, S36, S38),
Einstellen der vorbestimmten Vorrichtung (14, 19) auf eine Einstellung für niedrige Temperatur als Reaktion darauf, dass die Zeitspanne, die seit dem Start des Informationsendgeräts (10) oder dem Ende des Hot-Swap-Modus verstrichen ist, gleich oder länger als eine vorbestimmte Zeitspanne ist und die gemessene Temperatur der Batterievorrichtung (30) gleich oder niedriger als ein erster Schwellenwert ist,
Einstellen der vorbestimmten Vorrichtung (14, 19) auf die Einstellung für niedrige Temperatur als Reaktion darauf, dass die Zeitspanne, die seit dem Start des Informationsendgeräts (10) oder dem Ende des Hot-Swap-Modus verstrichen ist, kürzer als die vorbestimmte Zeitspanne ist und die gemessene Temperatur der Batterievorrichtung (30) gleich oder niedriger als ein zweiter Schwellenwert ist,
Einstellen der vorbestimmten Vorrichtung (14, 19) auf eine Einstellung für hohe Temperatur als Reaktion darauf, dass die Zeitspanne, die seit dem Start des Informationsendgeräts (10) oder dem Ende des Hot-Swap-Modus verstrichen ist, gleich oder länger als die vorbestimmte Zeitspanne ist und die gemessene Temperatur der Batterievorrichtung (30) höher als der erste Schwellenwert ist, und
Einstellen der vorbestimmten Vorrichtung (14, 19) auf die Einstellung für hohe Temperatur als Reaktion darauf, dass die Zeitspanne, die seit dem Start des Informationsendgeräts (10) oder dem Ende des Hot-Swap-Modus verstrichen ist, kürzer als die vorbestimmte Zeitspanne ist und die gemessene Temperatur der Batterievorrichtung (30) höher als der zweite Schwellenwert ist, der höher als der erste Schwellenwert ist.

## Revendications

1. Terminal d'informations (10) dans lequel un dispositif accumulateur (30) est attaché de façon amovible à un corps principal (10A) du terminal et qui inclut un dispositif préétabli (14, 19) séparé du dispositif accumulateur (30) dans le corps principal (10A) du terminal, le terminal d'informations comprenant :
une unité mesurant la température (11) qui est configurée pour obtenir des données de sortie d'informations de température à partir d'une sonde de température (301) disposée dans le dispositif accumulateur (30) et qui est configurée pour mesurer une température du dispositif accumulateur (30),
une unité de commande (11) qui est configurée pour mettre sur une position de réglage le dispositif préétabli (14, 19) sur la base d'une quantité de temps qui s'est écoulée depuis le moment où le terminal d'informations (10) démarre ou le moment où un mode d'échange à chaud, dans lequel le dispositif accumulateur (30) peut être échangé, se termine et de la température mesurée du dispositif accumulateur (30),
dans lequel l'unité de commande (11) est configurée pour mettre le dispositif préétabli (14, 19) sur une position de réglage pour basse température en réponse à la quantité de temps qui s'est écoulée depuis le moment où le terminal d'informations (10) démarre ou le mode d'échange à chaud se termine étant égale à une ou plus longue qu'une quantité de temps préétablie et la température mesurée du dispositif accumulateur (30) étant égale ou inférieure à un premier seuil,
dans lequel l'unité de commande (11) est configurée pour mettre le dispositif préétabli (14, 19) sur la position de réglage pour basse température en réponse à la quantité de temps qui s'est écoulée depuis le moment où le terminal d'informations (10) démarre ou le mode d'échange à chaud se termine étant plus courte que la quantité de temps préétablie et la température mesurée du dispositif accumulateur (30) étant égale ou inférieure à un second seuil,
dans lequel l'unité de commande (11) est configurée pour mettre le dispositif préétabli (14, 19) sur une position de réglage pour haute température en réponse à la quantité de temps qui s'est écoulée depuis le moment où le terminal d'informations (10) démarre ou le mode d'échange à chaud se termine étant égale à ou plus longue que la quantité de temps préétablie et la température mesurée du dispositif accumulateur (30) étant supérieure au premier seuil, et
dans lequel l'unité de commande (11) est configurée pour mettre le dispositif préétabli (14, 19) sur la position de réglage pour haute température en réponse à la quantité de temps qui s'est écoulée depuis le moment où le terminal d'informations (10) démarre ou le mode d'échange à chaud se termine étant plus courte que la quantité de temps préétablie et la température mesurée du dispositif accumulateur (30) étant supérieure au second seuil qui est plus élevé que le premier seuil.

2. Terminal d'informations (10) selon la revendication 1, dans lequel
le dispositif préétabli (14, 19) est un afficheur (14), et
l'unité de commande (11) est configurée pour mettre une fréquence d'horloge d'un circuit de commande de l'afficheur (14) sur une position de réglage élevée en tant que la position de réglage pour la basse température.

3. Terminal d'informations (10) selon la revendication 2, dans lequel, lorsqu'un mode suspendu qui arrête l'affichage sur l'afficheur (14) se termine, l'unité de commande (11) est configurée pour mettre l'afficheur (14) sur une position de réglage sur la base du premier et du second seuil de la température du dispositif accumulateur (30) et sur la base de la quantité de temps qui s'est écoulée depuis le moment où le terminal d'informations (10) démarre ou le moment où le mode d'échange à chaud se termine et de la température mesurée du dispositif accumulateur (30).

4. Terminal d'informations (10) selon la revendication 1, dans lequel
le dispositif préétabli (14, 19) est une unité clignotante (19) dans une unité de production d'image (18), et
l'unité de commande (11) est configurée pour mettre l'unité clignotante (19) sur une position d'indisponibilité en tant que la position de réglage pour basse température.

5. Terminal d'informations (10) selon la revendication 4, dans lequel, lorsqu'une application pour l'utilisation de l'unité d'image (18) est exécutée, l'unité de commande (11) est configurée pour mettre sur une position de réglage l'unité clignotante (19) sur la base du premier et du second seuil de la température du dispositif accumulateur (30) et sur la base de la quantité de temps qui s'est écoulée depuis le moment où le terminal d'informations (10) démarre ou le mode d'échange à chaud se termine et de la température mesurée du dispositif accumulateur (30).

6. Terminal d'informations (10) selon la revendication 1, dans lequel l'unité de commande (11) est configurée pour obtenir d'une unité de conservation du temps (20) des informations de date et heure actuelles et est configurée pour commencer à mesurer le temps écoulé à un positionnement temporel où le terminal d'informations (10) démarre et un positionnement temporel où le mode d'échange à chaud se termine.

7. Terminal d'informations (10) selon l'une quelconque des revendications 1 à 6, dans lequel la sonde de température (301) est un thermistor.

8. Terminal d'informations (10) selon l'une quelconque des revendications 1 à 7, dans lequel le dispositif accumulateur (30) est une batterie lithium-ion.

9. Procédé de commande exécuté dans un terminal d'informations (10) dans lequel un dispositif accumulateur (30) est attaché de façon amovible à un corps principal (10A) du terminal et qui inclut un dispositif préétabli (14, 19) séparé du dispositif accumulateur (30) dans le corps principal (10A) du terminal, le procédé comprenant les étapes consistant à :
obtenir des données de sortie d'informations de température à partir d'une sonde de température (301) disposée dans le dispositif accumulateur (30) et mesurant une température du dispositif accumulateur (30) (S17, S19, S35, S37),
mettre sur une position de réglage le dispositif préétabli (14, 19) sur la base d'une quantité de temps qui s'est écoulée depuis le moment où le terminal d'informations (10) démarre ou le moment où un mode d'échange à chaud, dans lequel le dispositif accumulateur (30) peut être échangé, se termine et de la température mesurée du dispositif accumulateur (30) (S18, S20, S36, S38),
mettre le dispositif préétabli (14, 19) sur une position de réglage pour basse température en réponse à la quantité de temps qui s'est écoulée depuis le moment où le terminal d'informations (10) démarre ou le mode d'échange à chaud se termine étant égale à une ou plus longue qu'une quantité de temps préétablie et la température mesurée du dispositif accumulateur (30) étant égale ou inférieure à un premier seuil,
mettre le dispositif préétabli (14, 19) sur la position de réglage pour basse température en réponse à la quantité de temps qui s'est écoulée depuis le moment où le terminal d'informations (10) démarre ou le mode d'échange à chaud se termine étant plus courte que la quantité de temps préétablie et la température mesurée du dispositif accumulateur (30) étant égale ou inférieure à un second seuil,
mettre le dispositif préétabli (14, 19) sur une position de réglage pour haute température en réponse à la quantité de temps qui s'est écoulée depuis le moment où le terminal d'informations (10) démarre ou le mode d'échange à chaud se termine étant égale à ou plus longue que la quantité de temps préétablie et la température mesurée du dispositif accumulateur (30) étant supérieure au premier seuil, et
mettre le dispositif préétabli (14, 19) sur la position de réglage pour haute température en réponse à la quantité de temps qui s'est écoulée depuis le moment où le terminal d'informations (10) démarre ou le mode d'échange à chaud se termine étant plus courte que la quantité de temps préétablie et la température mesurée du dispositif accumulateur (30) étant supérieure au second seuil qui est plus élevé que le premier seuil.

10. Programme informatique destiné à être exécuté par un processeur (11) dans un terminal d'informations (10) dans lequel un dispositif accumulateur (30) est attaché de façon amovible à un corps principal (10A) du terminal et qui inclut un dispositif préétabli (14, 19) séparé du dispositif accumulateur (30) dans le corps principal (10A) du terminal, le programme commandant au processeur (11) d'effectuer les opérations consistant à :
obtenir des données de sortie d'informations de température à partir d'une sonde de température (301) disposée dans le dispositif accumulateur (30) et mesurant une température du dispositif accumulateur (30) (S17, S19, S35, S37),
mettre sur une position de réglage le dispositif préétabli (14, 19) sur la base d'une quantité de temps qui s'est écoulée depuis le moment où le terminal d'informations (10) démarre ou le moment où un mode d'échange à chaud, dans lequel le dispositif accumulateur (30) peut être échangé, se termine et de la température mesurée du dispositif accumulateur (30) (S18, S20, S36, S38),
mettre le dispositif préétabli (14, 19) sur une position de réglage pour basse température en réponse à la quantité de temps qui s'est écoulée depuis le moment où le terminal d'informations (10) démarre ou le mode d'échange à chaud se termine étant égale à une ou plus longue qu'une quantité de temps préétablie et la température mesurée du dispositif accumulateur (30) étant égale ou inférieure à un premier seuil,
mettre le dispositif préétabli (14, 19) sur la position de réglage pour basse température en réponse à la quantité de temps qui s'est écoulée depuis le moment où le terminal d'informations (10) démarre ou le mode d'échange à chaud se termine étant plus courte que la quantité de temps préétablie et la température mesurée du dispositif accumulateur (30) étant égale ou inférieure à un second seuil,
mettre le dispositif préétabli (14, 19) sur une position de réglage pour haute température en réponse à la quantité de temps qui s'est écoulée depuis le moment où le terminal d'informations (10) démarre ou le mode d'échange à chaud se termine étant égale à ou plus longue que la quantité de temps préétablie et la température mesurée du dispositif accumulateur (30) étant supérieure au premier seuil, et
mettre le dispositif préétabli (14, 19) sur la position de réglage pour haute température en réponse à la quantité de temps qui s'est écoulée depuis le moment où le terminal d'informations (10) démarre ou le mode d'échange à chaud se termine étant plus courte que la quantité de temps préétablie et la température mesurée du dispositif accumulateur (30) étant supérieure au second seuil qui est plus élevé que le premier seuil.
